# EUROPEAN PATENT APPLICATION

(11) **EP 4 657 630 A1**
(43) Date of publication of application: **03.12.2025**
(21) Application number: 24216699.9
(22) Date of filing: 29.11.2024
(51) Int. Cl.: H01M 50/244, H01M 50/249, H01M 50/358, H01M 50/271, H01M 50/262, H01M 50/308, H01M 50/367

(54) **BATTERY CASE AND VENTING STRUCTURE OF BATTERY CASE**

(30) Priority: 30.05.2024 CN 202421225051 U; 09.07.2024 WO PCT/CN2024/104483
(71) Applicant: Eve Energy Co., Ltd., Huizhou, Guangdong 516006 (CN)
(72) Inventor: LIU, Xiangsheng, Huizhou, Guangdong 516006 (CN)
(74) Representative: Berggren Oy

(57) **Abstract**

Disclosed are a venting structure of a battery case and the battery case. The venting structure includes a support body (1) having a venting cavity (11) and a sealing cover (2). A first end of the support body is connected to a base plate of the battery case, and a side wall of the support body has one or more lateral gas inlets (114) that are in communication with the venting cavity and the battery case. A second end of the support body away from the base plate is connected to the sealing cover (2). One or more venting holes (24) are disposed on the sealing cover to communicate with the battery case.

## Description

### TECHNICAL FIELD

The present disclosure relates to venting in batteries, and more particularly, to a venting structure of a battery case and a battery case.

### BACKGROUND

In manufacturing of battery packs, foaming technology is widely used to improve properties of the battery packs, such as sealing capacity, thermal insulation, and mechanical strength. Currently, the dominant foaming modes in the battery pack include foaming outside the module case and non-full potting foaming in entire battery pack. These foaming modes are generally done in the module or in portions of the battery pack, and the emission of gases during the foaming processes does not need to be considered, as the foaming generally is carried out in an open or semi-open environment.

However, with the continuous development of design and manufacturing technology of the battery pack, full potting foaming technology has been increasingly concerned. In the full potting foaming technology, the foam material is fully injected into the entire battery pack to provide a more uniform, complete sealing and thermal insulation effect.

### SUMMARY

In the manufacturing process of the fully potting foaming battery pack, a closed space is formed inside the battery pack when the cover of the battery pack is locked. In the closed space, the foaming material generates gas during the curing reaction. However, the gas cannot be discharged due to the closed space of the battery pack, and then is transformed into bubbles at the bottom of the case cover. These bubbles affect the overall aesthetic appearance of the battery pack, but, more disadvantageously, they damage the bonding structure between the cover and the case, impair the sealing performance of the battery pack, and affect the safety thereof.

The present disclosure provides an venting structure of a battery case, comprising: a support body having an venting cavity, in which a first end of the support body is connected to a base plate of the battery case, and a side wall of the support body has one or more lateral gas inlets that are in communication with the venting cavity and the battery case; and a sealing cover connected to a second end of the support body away from the base plate, in which the sealing cover has one or more venting holes that are in communication with the venting cavity and the battery case.

The present disclosure further provides a battery case, comprising a bottom guard plate, a side beam frame, a battery cover, an intermediate beam, and one or more venting structures. The side beam frame surrounds the bottom guard plate to form a battery compartment, the battery cover is configured to cover the battery compartment, the intermediate beam is disposed in the battery compartment and fixedly connected to the bottom guard plate. One or more via holes are disposed on the battery cover, and each of the sealing covers partially passes through a corresponding one of the via holes to connect to a corresponding one of the support bodies disposed on the intermediate beam.

### BENEFICIAL EFFECT

According to the venting structure of the battery case of the present disclosure, a gas generated by foaming can enter the venting cavity through lateral gas inlets and be discharged through venting holes of the sealing cover, thereby reducing bubbles in the battery case, reducing space occupation inside the battery case, providing seal and waterproof for the battery case, and enhancing structural stability and impact resistance of the battery pack.

According to the battery case of the present disclosure, an venting effect can be achieved in the full potting a battery case with foam adhesive through the lateral gas inlets and the venting holes of a support body, so that bubbles below the battery cover are reduced, a bonding area of the battery cover is increased, and the overall strength of the battery pack is improved. Meanwhile, the support body also functions to support the battery cover, thereby reducing the cost of the fixing parts of the battery cover.

### BRIEF DESCRIPTION OF THE DRAWINGS

FIG. 1 is a schematic exploded diagram of a partial structure of a venting structure according to some embodiments of the present disclosure.
FIG. 2 is a schematic cross-sectional view of a venting structure according to some embodiments of the present disclosure.
FIG. 3 is a schematic exploded diagram of a partial structure of a battery case according to some embodiments of the present disclosure.
FIG. 4 is a schematic diagram of an internal structure of a battery case according to some embodiments of the present disclosure.
FIG. 5 is a schematic assembly diagram of a venting structure in a battery case according to some embodiments of the present disclosure.

### List of reference numerals:

1. Support body; 11. Venting cavity; 111. Cavity body; 112. Sealing cavity; 113. Connecting cavity; 1131. Internal screws; 114. Lateral gas inlet; 12. Lip; 121. Sealing groove; 122. Sealing member; 13. Assembly platform; 131. Adhesive layer; 2. Sealing cover; 21. Sealing section; 211. Annular groove; 212. Seal ring; 22. Fixing section; 221. External screws; 23. Operation section; 231. Cover body; 232. Protrusion part; 233. Rectangular flat surfaces; 24. Venting hole; 3. Intermediate beam; 4. Battery cover; 41. Via hole; 5. Bottom guard plate; 6. Side beam frame; 7. Battery compartment.

### DETAILED DESCRIPTION

In the description of the present disclosure, unless otherwise expressly defined and specified, the terms such as "couple", "connect", and "fix" are to be understood in a broad sense, for example, as a fixed connection, a detachable connection, an integrated unit, a mechanical connection, an electrical connection, a direct connection, an indirect connection by an intermediating medium, an internal communication between two elements, or interaction between two elements. For those of ordinary skill in the art, the specific meaning of the above terms in the present disclosure may be understood as appropriate.

Unless otherwise expressly defined and specified, the phrases, such as a first feature "above" or "below" a second feature, means the first feature in direct contact with the second feature, or the first feature in indirect contact with the second feature by another feature(s) therebetween. In addition, the phrases, such as the first feature "above", "on" or "over" the second feature, mean the first feature being directly or obliquely above the second feature, or the first feature being located at a level higher than the second feature, and the phrases, such as the first feature "below", "under" or "beneath" the second feature, mean the first feature being directly or obliquely below the second feature, or the first feature being located at a level lower than the second feature.

In the description of embodiments, the terms, such as "up", "down", "left", "right", "front", "back", or other ones indicating orientations or positional relationships, are based on those shown in the accompanying drawings for the purpose of facilitating the description and simplifying the operation, and are not intended to indicate or imply that the device or element referred to be provided at a special orientation, or constructed or operated with a special orientation. Thus, those terms are not to be construed as a limitation to the present disclosure. Furthermore, the terms "first" and "second" are used to distinguish similar features and do not imply that these features are in a particular order or sequence.

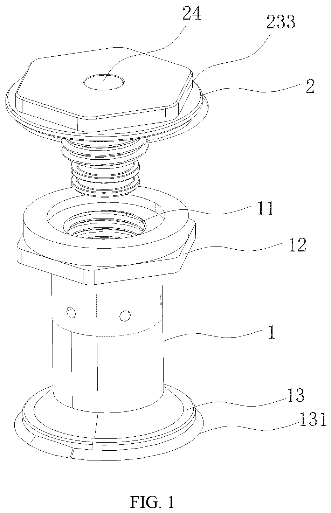

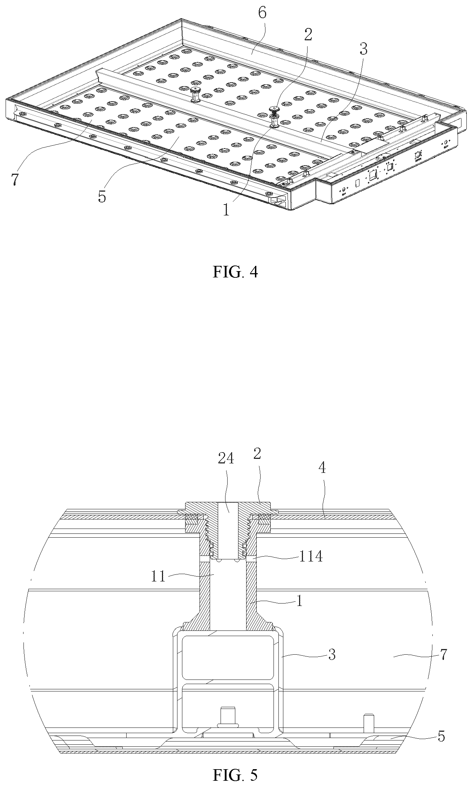

Referring to FIGs. 1, 2 and 5, the present disclosure provides a venting structure of a battery case, which includes a support body 1 having a venting cavity 11, and a sealing cover 2. A side of the support body 1 is connected to a base plate of the battery case, for example, to an intermediate beam 3 disposed on the base plate of the battery case, and the other side is connected to a battery cover 4. The intermediate beam 3 is hollow to reduce a weight thereof. The support body 1 has a venting cavity 11 inside, and one or more lateral gas inlets 114 communicating with the venting cavity 11 and the battery case. The lateral gas inlets 114 are configured to suck a gas generated during filling a foam adhesive into the battery case. The sealing cover 2 passes through the battery cover 4 to fit to the support body 1 for sealing, so that the support body 1 and the sealing cover 2 are assembled to the battery cover 4 of the battery case. One or more venting holes 24 are disposed on the sealing cover 2 to communicate with the venting cavity 11 and the battery case. The venting holes 24 are configured to discharge a gas in the venting cavity 11. When the foam adhesive is filled into the battery case, the gas generated by foaming of the foam adhesive may enter into the venting cavity 11 through the lateral gas inlets 114, and be discharged through the venting holes 24 of the sealing cover 2, so that the gas in the battery case which is filled with the foam adhesive can be discharged, thereby reducing the gas contained in the battery case.

In some embodiments, a side of the support body 1 close to the battery cover 4 is provided with a lip 12 extending outwardly along a circumferential direction, so as to increase a contact area between the support body 1 and the battery cover 4. A surface of the lip 12 facing the sealing cover 2 has a sealing groove 121, in which a seal 122 is disposed. The arrangement of the lip 12 and the sealing groove 121 increase a support area of the support body 1 to the battery cover, and improves a connection stability between the sealing cover 2 and the support body 1 through the battery cover. For example, the seal 122 is made of a material that provides buffering effect, such as a seal foam, which reduces the risk of damage due to vibration or shock.

In some embodiments, in order to improve the connection stability and the connection air tightness between the sealing cover 2 and the support body 1, the sealing cover 2 includes a sealing section 21, a fixing section 22, and an operation section 23 in sequence, and the venting cavity 11 of the support body 1 includes a cavity body 111, a sealing cavity 112, and a connecting cavity 113 in sequence, so that when the sealing cover 2 is fitted into the venting cavity 11 of the support body 1, the sealing section 21 corresponds to the sealing cavity 112, and the fixing section 22 corresponds to the connecting cavity 113. Specifically, the sealing section 21 contains one or more annular grooves 211 at a circumferential direction thereof. A sealing ring 212 is provided in each annular groove 211. The sealing ring 212 is, for example, an O-ring. The sealing ring 212 abuts against an inner wall of the sealing cavity 112. The fixing section 22 contains one or more external screws 221 at a circumferential direction thereof, and the connecting cavity 113 contains at a circumferential direction thereof one or more internal screws 1131 configured to guide the external screws 221 of the fixing section 22. The operating section 23 includes a cover body 231 which abuts against the lip 12. A side of the cavity body 111 away from the sealing cover 2 abuts against the intermediate beam 3, and the other side of the cavity body 111 has the lateral gas inlets 114 circumferentially arranged. Accordingly, the sealing section 21 can ensure the sealing effect between the sealing cover 2 and the support body 1, the fixing section 22 provides the connection and fixing effect between the sealing cover 2 and the support body 1, and the operation section 23 facilitates the operation of the sealing cover 2, thereby reaching the threaded connection and fixing between the fixing section 22 and the connection cavity 113 of the support body 1. The venting structure according to the present disclosure provides a convenient assembling and disassembling of various components and a good sealing by the sealing cavity 112 and the sealing section 21, and ensures the air tightness of the communication between the cavity body 111 or the venting cavity 11 and the lateral gas inlet 114.

It is to be noted that in some embodiments, a diameter of an inner wall of the sealing cavity 112 is equal to that of the cavity body 111 and less than that of the connecting cavity 113, so that the sealing cover 2 can be easily and smoothly inserted into the venting cavity 11, thereby facilitating the assembling between the sealing cover 2 and the support body 1.

In some embodiments, an assembly platform 13 extending outwardly is disposed on the support body 1 to improve the assembly stability thereof. The assembly platform 13 abuts against the intermediate beam 3. A connection portion between the support platform 13 and an outer wall of the venting cavity 11 has an inclined surface or an arc-shaped surface, thereby improving the support stability between the support body 1 and the intermediate beam 3. An adhesive layer 131 is provided between the assembly platform 13 and the intermediate beam 3, thereby improving the connection stability and air tightness between the support body 1 and the assembly platform 13. With this arrangement, the contact area between the support body 1 and the mounting platform 13 can be increased, so that the support stability to the support body 1 can be improved, and the strength can be improved.

In some embodiments, optionally, a protrusion part 232 is disposed on a surface of the cover body 231 away from the venting cavity 11, and extends away from an axis of the sealing cover 2. A peripheral side surface of the protrusion part 232 has two or more rectangular flat surface 233 connected to each other, which facilitates the user to drive the cover body 231 to rotate, and then to drive the sealing cover 2 to rotate, thereby achieving the threaded connection with the support body 1. For example, the protrusion part 232 with the flat surfaces 233 is formed into a triangular prism, a quadrangular prism, a pentagonal prism, a hexagonal prism, or other prisms with rounded corners. In other embodiments, the protrusion part 232 can also be made in the form of a cuboid shape, a cross shape, a flower shape, or a pillar shape with anti-slid patterns at edges thereof, to facilitate the operation by a user.

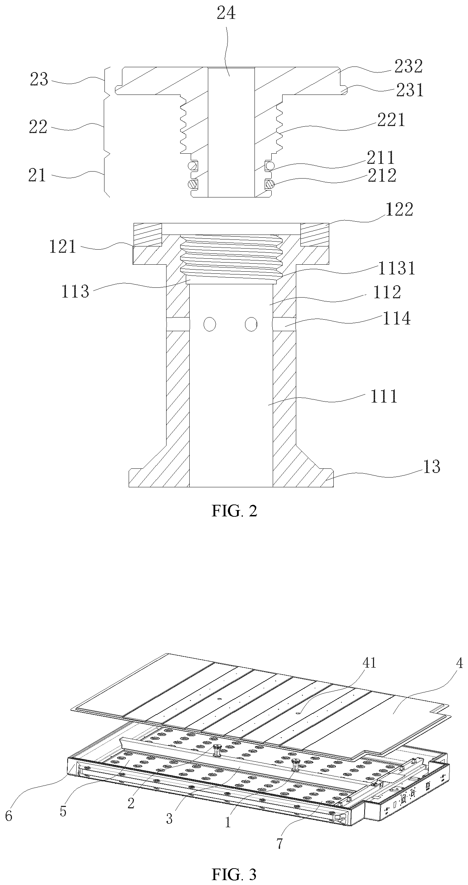

Referring to FIGs. 3 to 5, the present disclosure also provides a battery case, including a bottom guard plate 5, a side beam frame 6, the battery cover 4, the intermediate beam 3, and the venting structure. The side beam frame 6 surrounds the bottom guard plate 5 to form a battery compartment 7. The battery cover 4 covers the battery compartment 7. The intermediate beam 3 is disposed in the battery compartment 7 and is fixedly connected to the bottom guard plate 5. The battery cover 4 includes one or more via holes 41. The sealing cover 2 partially passes through each via hole 41 and is connected to the support body 1 on the intermediate beam 3. In some embodiments, the battery case includes a plurality of support bodies 1 described above. For example, two or more support bodies 1 are disposed on the intermediate beam 3, and each of the support bodies 1 corresponds to one via hole 41 and one sealing cover 2. In some embodiments, the battery case includes two support bodies 1, two via holes 41, and two sealing covers 2. Thus, it is possible to discharge the gas through the lateral gas inlets 114 of the support bodies 1 and the venting holes 24 in battery case filled with the foam adhesive, to reduce gas under the battery cover 4, to increase the adhesion area with the battery cover 4, and to improve the overall strength of the battery pack. Meanwhile, the support bodies 1 function as a support for the battery cover 4, and then some components for fixing the battery cover 4 can be omitted, thereby reducing the cost.

It is to be noted that, in other embodiments, the battery case includes a plurality of intermediate beams 3, so that the number of the support bodies 1 may be further increased to sufficiently discharge the gas at a plurality of positions after the battery compartment 7 is filled with the foam adhesive. The number of the intermediate beams 3 may be changed according to actual conditions.

In view of the above, the venting structure of the battery case and the battery case according to the present disclosure have the following advantage effects.

After the foam adhesive is filled in the battery case, the gas generated from the foam adhesive can enter the venting cavity 11 through the lateral gas inlets of the support body 1 and then be discharged through the venting holes 24 of the sealing cover 2, thereby avoiding the formation of bubbles in the battery case due to the inability to discharge gas. Therefore, it can improve the sealing performance of the battery case, and enhance the overall strength of the battery pack.

When the gas from the foam adhesive is exhausted or no gas is generated again, the foam adhesive may enter the lateral gas inlets of the support body 1 and block the lateral gas inlets and a part of the venting cavity 11, thereby reaching a closed space inside the battery case;

The venting structure of the battery case is capable of efficiently discharging the gas, so that bubbles in the battery case are reduced, the occupied space in the battery case is reduced, the battery case has sealing property and waterproof property, and structural stability and impact resistance of the battery pack are enhanced.

The technical solutions according to the present disclosure are not limited to the embodiments described above, but also include the technical solutions including any combination of the above technical features. It is to be noted that several modifications and embellishments may be made by those skilled in the art without departing from the principles of the present disclosure, and these modifications and embellishments are also considered to be within the scope of the present disclosure.

## Claims

1. A venting structure of a battery case, **characterized in** by comprising:
a support body (1) having an venting cavity (11) inside, wherein a first end of the support body (1) is connected to a base plate of the battery case, and a side wall of the support body (1) has one or more lateral gas inlets (114) that are in communication with the venting cavity (11) and the battery case; and
a sealing cover (2) connected to a second end of the support body (1) away from the base plate, wherein the sealing cover (2) has one or more venting holes (24) that are in communication with the venting cavity (11) and the battery case.

2. The venting structure according to claim 1, **characterized in that** a lip (12) is disposed on the second end of the support body (1) and extends outwardly along a circumferential direction of the support body (1), and
a sealing groove (121) is disposed on a surface of the lip (12) facing the sealing cover (2), and has a sealing member (122) therein.

3. The venting structure according to claim 2, **characterized in that** the sealing cover (2) comprises the following in sequence:
a sealing section (21), wherein one or more annular grooves (211) are circumferentially disposed on the sealing section (21), and a sealing ring (212) is disposed in each of the annular grooves (211) to abut against an inner wall of the venting cavity (11);
a fixing section (22), wherein external screws (221) are circumferentially disposed on the fixing section (22); and
an operating section (23), wherein the operating section (23) comprises a cover body (231) to abut against the lip (12).

4. The venting structure according to claim 3, **characterized in that** the venting cavity (11) comprises the following in sequence:
a cavity body (111), wherein an end of the cavity body (111) abuts against an intermediate beam (3), and another end of the cavity body (111) comprises the lateral gas inlets (114) along a circumferential direction of the cavity body (111);
a sealing cavity (112) configured to abut against the sealing ring (212) for sealing; and
a connecting cavity (113), wherein internal screws (1131) are circumferentially disposed on the connecting cavity (113) and engaged with the external screws (221) of the fixing section (22).

5. The venting structure according to claim 4, **characterized in that** an inner diameter of the sealing cavity (112) is equal to that of the cavity body (111), and less than that of the connecting cavity (113).

6. The venting structure according to any one of claims 1 to 5, **characterized in that** an assembly platform (13) is disposed on the first end of the support body (1) and extends outwardly along a circumferential direction of the support body (1), and the assembly platform (13) is connected closely to the intermediate beam (3).

7. The venting structure according to claim 6, **characterized in that** an adhesive layer (131) is provided between the assembly platform (13) and the intermediate beam (3).

8. The venting structure according to claim 6, **characterized in that** a connection portion between the assembly platform (13) and an outer side surface of the support body (1) has an inclined surface or an arc-shaped surface.

9. The venting structure according to claim 3, **characterized in that** a protrusion part (232) is disposed on a surface of the cover body (231) away from the venting cavity (11), and a plurality of rectangular flat surfaces (233) are disposed on a peripheral side surface of the protrusion part (232).

10. The venting structure according to claim 9, **characterized in that** a connection portion between any two of the plurality of rectangular flat surfaces (233) has an arc-shaped surface.

11. A battery case **characterized in** by comprising a bottom guard plate (5), a side beam frame (6), a battery cover (4), an intermediate beam (3), and one or more venting structures according to any one of claims 1 to 10,
wherein the side beam frame (6) surrounds the bottom guard plate (5) to form a battery compartment (7), the battery cover (4) is configured to cover the battery compartment (7), the intermediate beam (3) is disposed in the battery compartment (7) and fixedly connected to the bottom guard plate (5), and
one or more via holes (41) are disposed on the battery cover (4), and each of the sealing covers (2) partially passes through a corresponding one of the via holes (41) to connect to a corresponding one of the support bodies (1) disposed on the intermediate beam (3).

12. The battery case according to claim 11, **characterized in that** two or more of the support bodies (1) are provided on the intermediate beam (3), and each of the support bodies (1) corresponds to a corresponding one of the via holes (41) and a corresponding one of the sealing covers (2).
